# EUROPEAN PATENT APPLICATION

(11) **EP 1 130 176 A1**
(43) Date of publication of application: **05.09.2001**
(21) Application number: 01200130.1
(22) Date of filing: 15.01.2001
(51) Int. Cl.: E03B 3/02, E04D 13/08

(54) **Filter device**

(30) Priority: 26.01.2000 NL 1014178
(71) Applicant: WAVIN B.V., 8011 CW Zwolle (NL)
(72) Inventor: Offringa, Oege René, 7772 JE Hardenberg (NL)
(74) Representative: Iemenschot, Johannes Andreas, Ir.

(57) **Abstract**

A filter device for water, in particular rainwater, comprises an inlet part (2) having an outflow edge part (6) which ends in an outflow edge (7), a filter housing (3), which adjoins the inlet part (2) in the region of the outflow edge part (6), and an outlet part (4), which adjoins the filter housing (3) and has a first outlet (14) for dirty water and a second outlet (15) for clean water. The filter housing is formed by an outer casing (9) and a screen (10) arranged concentrically therein. The screen (10) is formed from a sheet-like screening material which is smooth on one side and is provided with holes, the dimensions of which are between 300 and 500 µm and increase from the smooth side towards the other side. The smooth side of the screening material lies on the inner side of the screen (10). The shape of the outflow edge part (6) and the location of the outflow edge are selected in such a manner that the water flowing from the outflow part comes into contact with the screen (10) as far as possible at right angles. A screen of this type becomes soiled less quickly and the clean water yield is high.

## Description

The invention relates to a filter device according to the preamble of claim 1.

A filter device of this type is known from, for example DE-A-3812136 and is used in particular to purify rainwater by filtering out impurities. The purified rainwater can be collected and reused, for example for infiltration into the ground, sprinkling, flushing toilets, etc. In the known device, the inlet part ends with the outflow edge in the region of the upper edge part of the screen. The upper edge part of the screen is closed and does not allow any water to pass through. There is a narrow gap between the outlet edge of the inlet part and the closed upper edge part of the screen. The device functions in such a manner that (rain)water which flows out of the inlet part and, on account of the adhesive effect of the material of the inlet part, follows the inner wall of the inlet part initially comes into contact with the screen on the impermeable upper edge part. The water then flows over the upper edge part and in part flows through the screen. Most of the water is sucked through the screen and flows away via the outlet for clean water to, for example, a storage tank, from which it can be reused. Only a small proportion of the water, containing impurities which cannot pass through the screen, remains on the inner side of the screen. This water flows away through the outlet for dirty water and will generally be drained into the sewage system.

The drawback of the type of filter device described above is the fact that it becomes contaminated relatively quickly. If the screen is to separate out sufficiently fine dirt, small holes are required in the screen. However, these small holes quickly become dirty. This in turn gives rise to a type of algae growing on the inner side of the screen. This problem can be overcome reasonably well by regular cleaning of the filter device. However, in practice it has been found that this regular cleaning does not take place, and consequently the efficiency of the filter device decreases rapidly.

It is an object of the invention to reduce the problem of rapid contamination.

According to the invention, this object is achieved by a filter device according to claim 1.

It has been found that a filter device with a screen of this type is highly effective and is much less susceptible to contamination than the known filter devices.

Advantageous and preferred embodiments of the filter device according to the invention are defined in the dependent claims.

The invention will be explained in more detail in the following description of an exemplary embodiment with reference to the drawing, in which:
Fig. 1 shows a longitudinal section through a preferred embodiment of the filter device according to the invention,

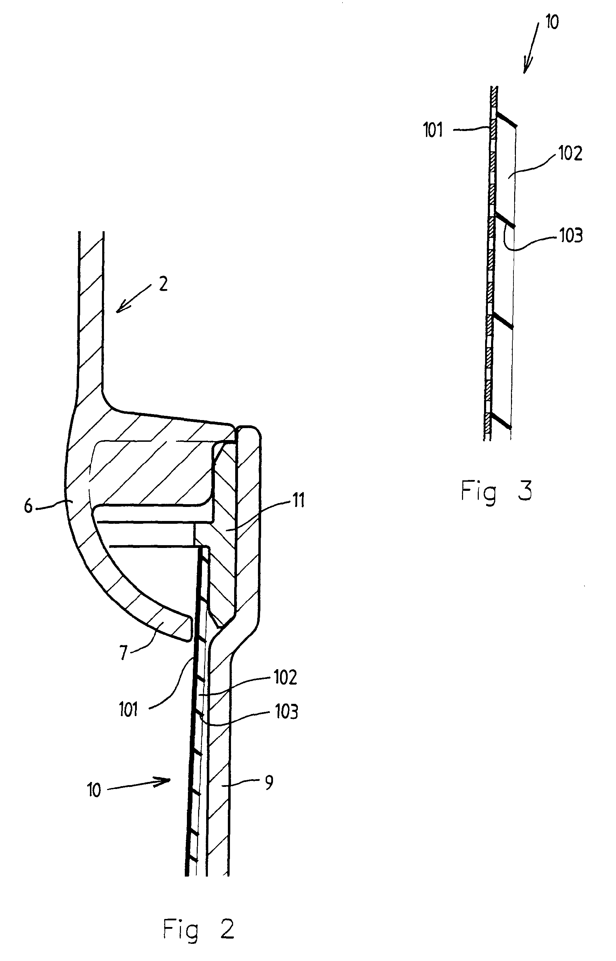

Fig. 2 shows an enlarged view of a detail II from Fig. 1,
Fig. 3 shows an enlarged view of a detail of the screen of the filter device shown in Fig. 1,
Fig. 4 shows the flow behaviour of the water at the location of the detail of the filter device from Fig. 1 illustrated in Fig. 2.

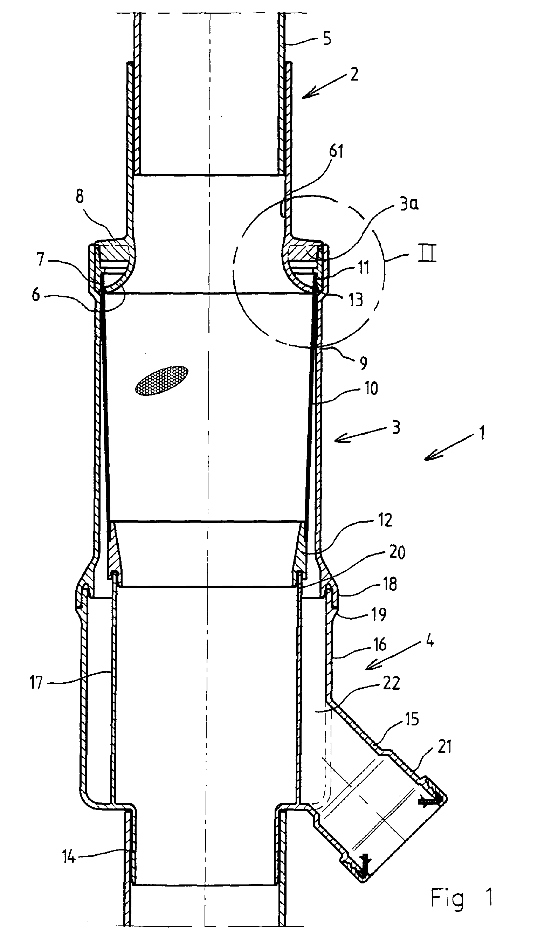

Fig. 1 shows a filter device according to the invention, which is denoted overall by the reference numeral 1. The filter device comprises the following main components: an inlet part 2, a filter housing 3 and an outlet part 4.

The inlet part 2, which is of substantially cylindrical design, has an internal diameter at the top which is such that it just fits around a standard rainwater downpipe 5. At the bottom, the inlet part 2 is provided with an outflow edge part 6 which ends in an outflow edge 7. The outflow edge part 6 widens outwards towards the outflow edge 7, with a convex shape on the inner side. In the vicinity of the outflow edge part 6, the inlet part 2 is provided on the outer side with a support flange 8 which, in the installed position of the device, is supported on the upper edge of the filter housing 3. The inlet part 2 is centred with respect to the filter housing 3 by projections 8a or a continuous circumferential rim on the underside and in the vicinity of the outer edge of the support flange 8.

The filter housing 3, which is likewise substantially cylindrical, is formed by an outer casing 9 and a screen 10 which is arranged concentrically therein and has an upper edge part 11 and a lower edge part 12, at least that section of the screen 10 which lies between the upper edge part 11 and the lower edge part 12 being permeable. The upper edge part 11 is connected to the outer casing 9, preferably by means of an adhesive bond. However, a click-fit or clamping connection is also possible. The space between the screen 10 and the outer casing 9 of the filter housing increases gradually towards the lower edge part 12, for example as a result of the outer casing 9 being of cylindrical design and the screen 10 being of conical design.

The outflow edge 7 of the inlet part 2 is situated at the level of or below the upper edge 13 of the permeable section of the screen 10, so that the water which runs off the outflow edge meets the permeable section of the screen 10 immediately and preferably as far as possible at right angles. This on the one hand leads to a very high efficiency, since the water immediately passes through the filter, and on the other hand the powerful flow flushes dirt away from this part of the filter. In this way, a high efficiency is obtained in particular when there is little rainfall and the filter remains very clean in this area.

The outlet part 4 adjoins the underside of the filter housing 3 and comprises a first outlet 14 for dirty water and a second outlet 15 for clean water. The outlet part 4 is to a large extent of double-walled design, with an outer wall 16 and an inner wall 17 which adjoin one another at the bottom. The lower edge 18 of the outer casing 9 of the filter housing 3 is supported on the upper edge 19 of the outer wall 16 of the outlet part 4, and the lower edge part 12 of the screen 10 adjoins the upper edge 20 of the inner wall 17 of the outlet part 4. The outlet 15 for clean water is connected to the bottom section of the outer wall 16 of the outlet part 4 and is preferably at an angle of 45° with respect to the outlet part 4. The outlet 4 is preferably provided with an integral socket 21.

The screen 10 is formed from a sheet-like screening material 101 which is very smooth on one side and is provided with holes, the dimensions of which increase from the smooth side towards the other side. The screen 10 is formed by bending the screening material 101 into the desired shape of the screen in such a manner that the smooth side of the screening material 101 lies on the inner side of the screen 10.

The dimensions of the holes in the screening material 101 are preferably between 300 and 500 µm. Very good results are obtained with holes with dimensions of approximately 400 µm. The holes will generally be round, the diameter corresponding to the abovementioned dimensions.

Since the dimensions of the holes in the screening material 101 increase towards the outer side of the screen, there is little risk of the holes becoming blocked. Dirt particles which just fit into the holes are flushed outwards by the water flowing through the holes. Since the screen 10 is very smooth on the inner side, dirt which cannot fit through the holes will easily be flushed away by the water flowing along the inner side of the screen 10. The smooth inner wall also makes it difficult for algae to attach themselves to it.

The screening material 101 is, for example, a mesh 50 filter material which is produced by Stork Veco B.V. by electrodeposition and is marketed under the name VECONIC, with round holes with a diameter of 400 µm.

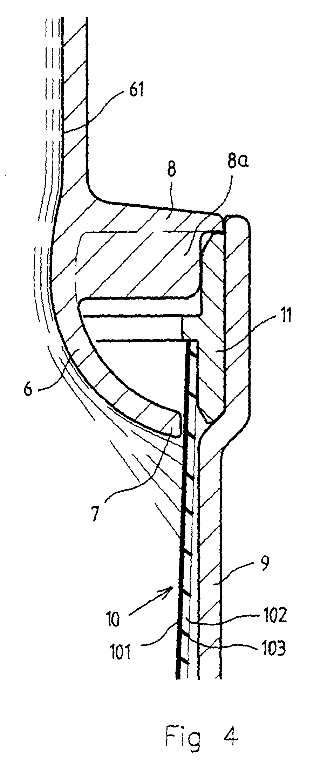

The screening material 101 is positioned in a precise-fit outer cone which consists of gauze material 102 (cf. Fig. 3). This gauze material 102 serves firstly as a support for the screening material 101 and secondly to discharge the water which has passed through the screening material to the outside. The gauze material 102 is therefore designed in such a way that the "small bars" 103 comprise small plates which are oriented obliquely downwards and are approx. 1 mm long.

The filter device operates as follows. Rainwater containing impurities flows along the inner wall of the rainwater downpipe 5, the inner wall of the inlet part 2 and the outflow edge part 6. On account of the convex shape of the outflow edge part 6, the rainwater follows the outflow edge part 6 to close to the outflow edge 7 (cf. Fig. 4). Then, the rainwater passes directly onto the screen 10 and in part flows through the screen 10. On account of the design of the screen 10, the water which has passed through the screening material 101 is rapidly discharged and a sucking action is exerted on the water on the inside of the filter. In practice, it has been found that gauze material with a pattern of diamond-shaped holes with a largest dimension of approx. 7 mm and a smallest dimension of approx. 3 mm and a horizontal position in the operating state of the filter is eminently satisfactory. On account of the increasing space between the screen 10 and the outer casing 9, there is sufficient space for the increasing flow of filtered rainwater. On the inner side of the screen 10, there is less and less water towards the bottom, containing all the impurities which are too coarse to pass through the screen 10.

The filtered water passes into the space 22 formed between the outer wall 16 and the inner wall 17 of the outlet part 4 and, via the outlet 15 for clean water, flows to a storage tank, for example. The water containing impurities runs off the inner side of the screen 10 towards the outlet 14 for dirty water, from where it can be drained to the sewage system.

Since only the upper edge part 11 of the screen 10 is connected to the outer casing 9 of the filter housing 3, further downstream there are no connection points between the screen 10 and the outer casing 9, which could disturb the flow between the outer side of the screen 10 and the inner side of the outer casing 9. Consequently, the flow of water coming through the screen 10 can remain optimal. This increases the efficiency of the filter device.

It should be noted that the advantageous properties of the screening material used also manifest themselves when it is used in known filter devices. However, optimum results are obtained by combining the screening material described above and the design of the filter device described above. Tests have shown that the efficiency of a filter device with a tube dimension of 80 mm is above 97% at flow rates of up to 40 1/min.

To enable the screen 10 to be cleaned, the latter is accommodated removably in the filter device 1. It is possible to remove the screen 10 due to the fact that the inlet part 2 can be pushed upwards over the rainwater downpipe 5. Since the inlet part 2 has a small narrowing 61 at the bottom of the cylindrical section, with an internal diameter which is slightly less than the external diameter of the rainwater downpipe 5 (cf. Fig. 1), the inlet part 2 can be clamped onto the rainwater downpipe 5. The filter housing 3 can then be pushed upwards slightly and removed between the inlet part 2 and the outlet part 4. The screen 10 can then be inspected and/or cleaned without having to be removed from the filter housing 3 and without the rainwater downpipe 5 or its securing means having to be detached. The shape of the filter housing 3 means that it cannot be put back into the filter device 1 upside down.

In the case of a click-fit or clamping connection between the screen 10 and the outer casing 9, it is possible for the screen 10 to be removed from the outer casing 9 and replaced if necessary, for example if the screen 10 is damaged.

A compact structure of the entire installation can be achieved as a result of the outlet 15 for clean water being positioned at an angle of 45° and this outlet 15 being provided with an integral socket 21. A connection line to a storage tank for the filtered water can be directly connected to the outlet 15. Positioning the outlet 15 at an angle of 45° means that there is a better pressure build-up in the line connected to the outlet 15, which is particularly important if a relatively long horizontal connection line is required between the outlet 15 and a storage tank for the filtered water.

The filter device 1, and in particular the inlet part 2, the outer casing 9 of the filter housing 3 and the outlet part 4, is preferably formed from plastic. As a result, there is no release of metals to the frequently aggressive rainwater, as is the case, for example, with copper or galvanized devices. The various parts of the filter device which are formed from plastic may be formed, for example, by injection moulding.

## Claims

1. Filter device for water, in particular rainwater, comprising an inlet part (2) having an outflow edge part (6) which ends in an outflow edge (7), a filter housing (3), which adjoins the inlet part (2) in the region of the outflow edge part (6), and an outlet part (4), which adjoins the filter housing (3) and has a first outlet (14) for dirty water and a second outlet (15) for clean water, the filter housing being formed by an outer casing (9) and a screen (10) which is arranged concentrically therein and has an upper edge part (11) and a lower edge part (12), the upper edge part (11) being located in the vicinity of the outflow edge (7) of the inlet part (2) and the space between the screen (10) and the outer casing (9) increasing gradually from the upper edge part (11) towards the lower edge part (12), characterized in that the screen (10) is formed from a sheet-like screening material (101) which is smooth on one side and is provided with holes, the dimensions of which increase from the smooth side towards the other side, the smooth side of the screening material (101) lies on the inner side of the screen (10) and the shape of the outflow edge part (6) and the location of the outflow edge (7) are selected in such a manner that the water flowing from the outflow edge part (6) meets the screen (10) as far as possible at right angles.

2. Filter device according to claim 1, characterized in that the dimensions of the holes in the screening material (101) are between 300 and 500 µm and preferably are approximately 400 µm.

3. Filter device according to claim 1 or 2, characterized in that the outflow edge part (6) of the inlet part (2) widens outwards towards the outflow edge (7), with a convex shape on the inner side, and the outflow edge (7) is situated at the level of or below the upper edge (13) of the permeable section of the screen (10).

4. Filter device according to claim 3, characterized in that only the upper edge part (11) of the screen (10) is connected to the outer casing (9) of the filter housing (3).

5. Filter device according to claim 4, characterized in that the upper edge part (11) of the screen (19) is connected to the outer casing by means of an adhesive bond.

6. Filter device according to claim 4, characterized in that the upper edge part (11) of the screen (10) is connected to the outer casing (9) by means of a click-fit or clamping connection.

7. Filter device according to one of claims 3-6, characterized in that the second outlet (15) is provided with an integral socket (21).

8. Filter device according to one of claims 3-7, characterized in that at least the inlet part (2), the outer casing (9) of the filter housing (3) and the outlet part (4) are formed from plastic.

9. Filter device according to one of the preceding claims, characterized in that the screen (10) is formed from an inner layer of the screening material (101) and an outer layer of a gauze material (102), the inner layer and the outer layer closely adjoining one another.

10. Filter device according to claim 8, characterized in that the gauze material (102) comprises small bars (103) which, in the installed position of the screen (10), are oriented obliquely outwards and downwards.

11. Filter device according to claim 9 or 10, characterized in that the gauze material (102) is provided with diamond-shaped holes with a length of approx. 7 mm and a width of approx. 3 mm and with small bars of approx. 1 mm.
